# EUROPÄISCHE PATENTSCHRIFT

(11) **EP 1 701 573 B1**
(45) Veröffentlichungstag und Bekanntmachung des Hinweises auf die Patenterteilung: **13.05.2020**
(21) Anmeldenummer: 06003877.5
(22) Anmeldetag: 25.02.2006
(51) Int. Cl.: H04W 8/10, H04W 84/04, H04W 84/08, H04W 88/16

(54) **System und Verfahren für die Lokalisierung des Aufenthaltsortes eines mobilen Endgerätes**
System and method for determining the location of a mobile terminal
Système et procédé pour la détermination de la position d'une station mobile

(30) Priorität: 09.03.2005 DE 102005011207
(43) Veröffentlichungstag der Anmeldung: 13.09.2006
(73) Patentinhaber: Vodafone Holding GmbH, 40213 Düsseldorf (DE)
(72) Erfinder: Holzer, Harald, 76698 Ubstadt-Weiher (DE); Gross-Weege, Josef, 47918 Tönisvorst (DE); Schmitz, Peter, 64354 Reinheim (DE)
(74) Vertreter: Weisbrodt, Bernd

(56) Entgegenhaltungen:
- WO-A-00/78071
- WO-A-99/40744
- US-A- 5 619 552
- US-A- 5 946 619
- US-A1- 2004 202 940
- US-B1- 6 212 372
- BESCOM ELEKTRONIK GMBH: "TETRA, Digitaler mobilfunk, Eigenschaften und Merkmale", INTERNET CITATION, 24 September 2002 (2002-09-24), XP002386153, Retrieved from the Internet: URL:http://blist.de/download/tetra-leistun gsmerkmale_v1-0-0.pdf [retrieved on 2006-06-19]

## Beschreibung

Die vorliegende Erfindung betrifft ein System zur Lokalisierung des Aufenthaltsortes eines in einem Mobilfunknetz betreibbaren mobilen Endgerätes für an dieses gerichtete Kommunikationsverbindungen, wobei das Mobilfunknetz wenigstens eine Vermittlungsfunktionen zum Aufbau von Kommunikationsverbindungen in dem Mobilfunknetz und/oder in wenigstens einem weiteren Kommunikationsnetz wahrnehmende Einrichtung aufweist, welche zumindest dazu mit einer Informationen über die Identität, den Aufenthaltsort und die zur Verfügung stehenden Dienste der mobilen Endgeräte im Mobilfunknetz enthaltenden Datenbank des Mobilfunknetzes verbindbar ist.

Ferner betrifft die vorliegende Erfindung ein Verfahren, welches das erfindungsgemäße System verwirklichend ausgebildet sind.

Die Lokalisierung des Aufenthaltsortes eines in einem Mobilfunknetz betreibbaren mobilen Endgerätes für an dieses gerichtete Kommunikationsverbindungen der eingangs genannten Art ist im Stand der Technik bekannt, insbesondere von Mobilfunknetzen gemäß dem GSM-, GPRS- und/oder UMTS-Standard.

Ferner sind im Stand der Technik mobile Endgeräte bekannt, die in einem ersten Betriebsmodus in einem Mobilfunknetz oder in einem zweiten Betriebsmodus in wenigstens einem weiteren Kommunikationsnetz betreibbar sind. Derartige mobile Endgeräte weisen dementsprechend zwei wahlweise nutzbare Sende-/Empfangseinrichtungen oder eine in zwei Betriebsmodi nutzbare Sende-/Empfangseinrichtung auf, wobei die beiden Sende-/Empfangseinrichtungen bzw. Betriebsmodi nicht kombinativ nutzbar sind.

Bei den bisher bekannten Systemen ist ein solches mobiles Endgerät bei einem Betrieb in dem zweiten Betriebsmodus in einem weiteren Kommunikationsnetz seitens des Mobilfunknetzes nicht mehr lokalisierbar. Mangels Lokalisierbarkeit des mobilen Endgerätes im Mobilfunknetz sind an das mobile Endgerät gerichtete Kommunikationsverbindungen über das Mobilfunknetz nicht möglich. Eine Erfassung einer Information über den zweiten Betriebszustand des mobilen Endgerätes seitens des Mobilfunknetzes ist nicht gegeben.

Es sind Kommunikationsanwendungen denkbar, wo zwar ein Betrieb in einem weiteren Kommunikationsnetz erfolgt, allerdings eine Erreichbarkeit für an das mobile Endgerät über das Mobilfunknetz gerichtete Kommunikationsverbindungen gewünscht und/oder erforderlich ist, beispielsweise für Kommunikationsanwendungen im Bereich von Behörden und/oder Organisationen mit Sicherheitsaufgaben, sogenannten BOS-Anwendungen.

In Anbetracht dieses Standes der Technik liegt der vorliegenden Erfindung die **A ufgabe** zugrunde, mit einfachen und kostengünstigen Mitteln und unter Meidung der beschriebenen Nachteile die Lokalisierung des Aufenthaltsortes eines in einem Mobilfunknetz betreibbaren mobilen Endgerätes für an dieses gerichtete Kommunikationsverbindungen zu verbessern.

Die Erfindung wird durch die anliegenden Ansprüche definiert.

Der Erfindung liegt die Erkenntnis zugrunde, dass durch Erfassung einer Information über den zweiten Betriebsmodus eines mobilen Endgerätes seitens des Mobilfunknetzes diese vorteilhafterweise für eine an das mobile Endgerät gerichtete Kommunikationsverbindung genutzt werden kann, vorzugsweise zur Lokalisierung des Aufenthaltsortes in dem weiteren Kommunikationsnetz derart, dass ein Aufbau und/oder eine Vermittlung einer an das mobile Endgerät gerichteten Kommunikationsverbindung seitens und/oder mittels der Vermittlungsfunktionen zum Aufbau von Kommunikationsverbindungen in dem Mobilfunknetz und/oder in wenigstens einem weiteren Kommunikationsnetz wahrnehmenden Einrichtung erfolgen kann.

Gemäß einem vorteilhaften Vorschlag der Erfindung erfolgt eine Nutzung der Information über den zweiten Betriebsmodus, wenn eine an das mobile Endgerät gerichtete Kommunikationsverbindung über das Mobilfunknetz nicht möglich ist, vorteilhafterweise, wenn das mobile Endgerät in der Datenbank des Mobilfunknetz hinsichtlich seines Aufenthaltsortes im Mobilfunknetz nicht aktiv auffindbar ist.

Vorteilhafterweise stellt die Datenbank des Mobilfunknetzes die Information über den zweiten Betriebsmodus der Einrichtung zur Verfügung, vorteilhafterweise automatisch. Dabei erfolgt vorteilhafterweise ein Durchsuchen der Datenbank nach einer entsprechenden Information über den zweiten Betriebsmodus, vorzugsweise vor, während und/oder nach einem Versuch einer Lokalisierung des Aufenthaltsortes des mobilen Endgerätes im Mobilfunknetz.

Gemäß einem vorteilhaften Vorschlag der Erfindung erfolgt mittels der Information über den zweiten Betriebsmodus eine Kommunikationsverbindung in das wenigstens eine weitere Kommunikationsnetz über die Einrichtung.

In einer weiteren vorteilhaften Ausgestaltung der Erfindung umfasst die Information über den zweiten Betriebsmodus eine Information über eine Identität und/oder einen Aufenthaltsort in dem wenigstens einen weiteren Kommunikationsnetz. Vorteilhafterweise ist die Information über die Identität anhand eines für einen Betrieb des mobilen Endgerätes in einem zweiten Betriebsmodus in dem wenigstens eine weiteren Kommunikationsnetz seitens des mobilen Endgerätes genutzten Teilnehmeridentifikationsmoduls (SIM) bestimmbar und wird entsprechend aus dieser bestimmt.

Bei einem Betrieb des mobilen Endgerätes im zweiten Betriebsmodus ist vorteilhafterweise zumindest eine an das mobile Endgerät über das Mobilfunknetz gerichtete Kommunikationsverbindung nicht möglich. So kann das mobile Endgerät vorteilhafterweise für von diesem abgehende Kommunikationsverbindungen das Mobilfunknetz nutzen. Dabei ist das mobile Endgerät vorzugsweise gleichzeitig im ersten und zweiten Betriebsmodus betreibbar.

Gemäß einem weiteren Vorschlag der Erfindung sind im ersten und/oder zweiten Betriebsmodus leitungsvermittelnde und/oder paketvermittelnde Funknetzstandards für Kommunikationsverbindungen nutzbar, vorzugsweise gemäß GSM, GPRS und/oder UMTS. Dadurch sind in den beiden Betriebsmodi vorteilhafterweise Sprache und/oder Daten über Kommunikationsverbindungen nutzbar.

Gemäß einer besonders bevorzugten Ausgestaltung der Erfindung erfolgt im zweiten Betriebsmodus eine Kommunikationsverbindung über ein digitales Bündelfunknetz, vorzugsweise mit Gruppenruffunktionalität, besonders bevorzugt gemäß TETRA- und/oder TETRAPOL-Standard. Dadurch ist vorteilhafterweise eine standardisierte Nutzung von Kommunikationsverbindungen im Bereich von Behörden und/oder Organisationen mit Sicherheitsaufgaben ermöglicht, wie sie von BOS-Anwendungen gefordert wird.

In einer konkreten Ausgestaltung der Erfindung ist die Einrichtung eine mobile Vermittlungsstelle (Mobile Switching Center (MSC)) des Mobilfunknetzes nutzend ausgebildet ist. In einer weiteren Ausgestaltung der Erfindung ist die Einrichtung ein Gateway Mobile Switching Center (GMSC) des Mobilfunknetzes. Eine weitere bevorzugte Ausgestaltung der Erfindung sieht vor, dass die Datenbank des Mobilfunknetzes das Home Location Register (HLR) und/oder ein Visitor Location Register (VLR) des Mobilfunknetzes ist.

Zur Lösung der eingangs genannten Aufgabe wird mit der vorliegenden Erfindung ferner ein Mobilfunknetz mit einer Informationen über die Identität, den Aufenthaltsort und den zur Verfügung stehenden Diensten der mobilen Endgeräte im Mobilfunknetz enthaltenden Datenbank und wenigstens einer Vermittlungsfunktionen zum Aufbau von Kommunikationsverbindungen in dem Mobilfunknetz und/oder in wenigstens einem weiteren Kommunikationsnetz wahrnehmenden Einrichtung, wobei die Einrichtung zumindest zum Aufbau und/oder zur Vermittlung von Kommunikationsverbindungen mit der Datenbank verbindbar ist, vorgeschlagen, wobei die Datenbank und die Einrichtung zur Nutzung eines erfindungsgemäßen Systems ausgebildet sind.

Darüber hinaus wird zur Lösung der eingangs genannten Aufgabe mit der vorliegenden Erfindung ein Verfahren zur Lokalisierung des Aufenthaltsortes eines in einem Mobilfunknetz betreibbaren mobilen Endgerätes für an dieses gerichtete Kommunikationsverbindungen, wobei das Mobilfunknetz wenigstens eine Vermittlungsfunktionen zum Aufbau von Kommunikationsverbindungen in dem Mobilfunknetz und/oder in wenigstens einem weiteren Kommunikationsnetz wahrnehmende Einrichtung aufweist, welche zumindest dazu mit einer Informationen über die Identität, den Aufenthaltsort und den zur Verfügung stehenden Diensten der mobilen Endgeräte im Mobilfunknetz enthaltenden Datenbank des Mobilfunknetzes verbindbar ist, vorgeschlagen, bei dem die Datenbank und die Einrichtung des Mobilfunknetzes ein erfindungsgemäßes System verwirklichend betrieben werden.

Gegenstand der vorliegenden Erfindung ist ferner ein mobiles Endgerät, welches in einem ersten Betriebsmodus in einem Mobilfunknetz und/oder in einem zweiten Betriebsmodus in wenigstens einem weiteren Kommunikationsnetz gemäß einem erfindungsgemäßen Systems betreibbar ausgebildet ist und betrieben wird. In einer bevorzugten Ausgestaltung der Erfindung weist das mobile Endgerät vorteilhafterweise eine in einem Mobilfunknetz betreibbare Sende-/Empfangseinrichtung und eine in einem Bündelfunknetz betreibbare Sende-/Empfangseinrichtung auf, welche von einer gemeinsamen Steuereinrichtung des mobilen Endgerätes gesteuert werden, vorzugsweise derart, dass ein gleichzeitiges Betreiben im Mobilfunknetz und im Bündelfunknetz ermöglicht wird, vorzugsweise mit Gruppenruffunktionalität, zumindest im besonders bevorzugt gemäß TETRA- und/oder TETRAPOL-Standard ausgebildeten Bündelfunknetz.

In einer besonders bevorzugten Ausgestaltung der Erfindung ist das weitere Kommunikationsnetz das Mobilfunknetz und/oder ein von diesem genutzter Dienst, beispielsweise ein Nachrichtendienst. Das mobile Endgerät ist dazu vorteilhafterweise derart ausgebildet, dass dieses in dem Mobilfunknetz mit zwei Identitäten, vorzugsweise über zwei SIM-Karten oder einer zwei SIM-Karten-Informationen beinhaltenden SIM-Karte, in dem Mobilfunknetz betreibbar. Dazu weist das mobile Endgerät, welches vorzugsweise ein Mobilfunktelefon ist, zwei entsprechend gemäß dem Standard des Mobilfunknetzes arbeitende Sende-/Empfangseinrichtungen auf. So kann vorteilhafterweise über eine Identität des mobilen Endgerätes im Mobilfunknetz eine erste Kommunikation und vorteilhafterweise gleichzeitig über die zweite Identität des mobilen Endgerätes im Mobilfunknetz eine zweite Kommunikation erfolgen. Damit ist durch gleichzeitige Nutzbarkeit der zwei Identitäten des mobilen Endgerätes im Mobilfunknetz über diese beiden Identitäten quasi ein sogenanntes Class-A-Terminal bzw. Class-A-Endgerät als auch ein entsprechender quasi Class-A-Terminal-Betrieb des Mobilfunknetzes nach Art bereitgestellt.

Die Datenbank des Mobilfunknetzes, vorzugsweise das HLR, ist dabei dementsprechend ausgebildet und in der Lage, zwei Identitäten eines mobilen Endgerätes miteinander derart zu verwalten, dass bei einem entsprechenden an eine erst Identität des mobilen Endgerätes gerichtete Kommunikationsverbindung das HLR bei nicht Erreichbarkeit derselben im Mobilfunknetz nachsieht, ob für diese erste Identität des mobilen Endgerätes eine zweite Identität vorhanden ist, die für die Kommunikationsverbindung nutzbar ist. Dazu sind die beiden Identitäten des mobilen Endgerätes im HLR vorteilhafterweise entsprechend nutzbar miteinander verknüpft bzw. verknüpfbar. Das HLR ist dementsprechend ausgebildet, die beiden Identitäten des mobilen Endgerätes zusammenzuführen.

Vorteilhafterweise ist eine der beiden Identitäten für Gruppenkommunikationsdienste nutzbar, vorzugsweise derart, dass die erste Identität bei Eintritt bzw. Nutzung in der Gruppe als eigene Identität aus dem Mobilfunknetz verschwindet. Das mobile Endgerät ist dann vorteilhafterweise entweder über die gesamte Gruppe als Gruppe oder aber als Individuum über die andere Identität - die zweite Identität - im Mobilfunknetz erreichbar. In einer vorteilhaften Ausgestaltung der Erfindung ist anhand oder mittels der zweiten Identität feststellbar, dass die erste Identität in einer Gruppe quasi unter- bzw. aufgegangen ist.

Die erfindungsgemäße Ausgestaltung der Nutzung von zwei Identitäten in einem Mobilfunknetz ermöglicht vorteilhafterweise in dem Mobilfunknetz eine Gruppenfunktionalität mit der ersten Identität und eine gleichzeitige Alarmierung über Kommunikationsverbindungen in dem Mobilfunknetz mittels der zweiten Identität. So kann sich in Gruppen zu Kommunikationszwecken aufhaltenden mobilen Endgeräten über die zweite Identität gleichzeitig zur Gruppenkommunikation vorteilhafterweise eine individuelle Kommunikationsinformation in Form von Sprache und/oder Daten übermittelt werden, was insbesondere für BOS-Anwendungen von Vorteil ist.

Weitere Einzelheiten, Merkmale und Vorteile der Erfindung werden nachfolgend anhand des in der Figur der Zeichnung dargestellten Ausführungsbeispiels näher erläutert. Dabei zeigt:

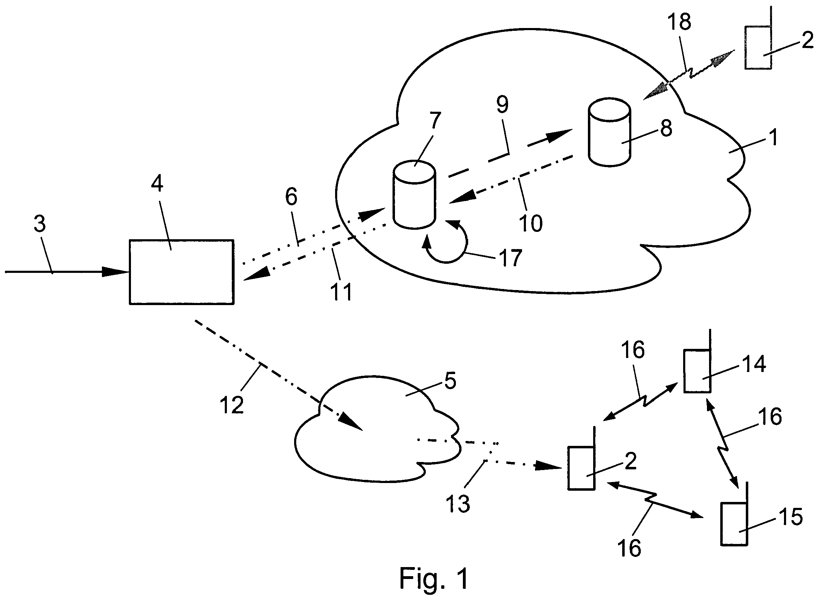

- Fig. 1: in einer schematischen Darstellung ein Ausführungsbeispiel für ein erfindungsgemäßes System zur Lokalisierung des Aufenthaltsortes eines in einem Mobilfunknetz betreibbaren mobilen Endgerätes für an dieses gerichtete Kommunikationsverbindungen.

Fig. 1 zeigt ein erfindungsgemäßes System zur Lokalisierung des Aufenthaltsortes eines in einem Mobilfunknetz 1 betreibbaren mobilen Endgerätes 2 für an dieses gerichtete Kommunikationsverbindungen 3.

Das Mobilfunknetz 1 ist vorliegend ein gemäß dem GSM-, GPRS- und/oder UMTS-Funknetzstandard ausgebildetes, eine digitale zellulares Netzstruktur mit Funkzellen aufweisendes Kommunikationsnetz, welches wenigstens eine Vermittlungsfunktionen zum Aufbau von Kommunikationsverbindungen 18 in dem Mobilfunknetz 1 wahrnehmende Einrichtung 4 aufweist.

Die Einrichtung 4 ist vorliegend als ein sogenanntes Gateway Mobile Switching Center (GMSC) ausgebildet, welches neben den Vermittlungsfunktionen zum Aufbau von Kommunikationsverbindungen 18 in dem Mobilfunknetz 1 auch Vermittlungsfunktionen zum Aufbau von Kommunikationsverbindungen 12, 13 in einem weiteren Kommunikationsnetz 5 wahrnehmen kann.

Weiter weist das Mobilfunknetz 1 eine netzwerkweit bekannte Datenbank 7, ein sogenanntes Home Location Register (HLR) auf, welches insbesondere Informationen über die Identität, den Aufenthaltsort und den zur Verfügung stehenden Diensten der mobilen Endgeräte 2 im Mobilfunknetz 1 enthält, und eine mit bestimmten Funkzellen im Mobilfunknetz 1 assoziierte Datenbank 8, ein sogenanntes Visitor Location Register (VLR) auf, welche im Mobilfunknetz 1 mit der Datenbank 7 verbindbar ist. Eine solche Verbindung zwischen den Datenbanken 7 und 8 kann dabei auch durch Bereithalten einer Kopie zumindest eines Teils der Datenbank 7, ein sogenanntes Spiegeln, seitens der Datenbank 8 erfolgen.

Das Kommunikationsnetz 5 ist vorliegend ein digitales Bündelfunknetz 5 gemäß dem TETRA- und/oder TETRAPOL-Standard, welches für Kommunikationsanwendungen von Behörden und/oder Organisationen mit Sicherheitsaufgaben genutzt wird. Dabei sind in bzw. mit Bündelfunknetz 5 mobile Endgeräte 2, 14 und 15 eine Gruppenkommunikation 16 nutzend betreibbar.

Das mobile Endgerät 2 ist vorliegend als ein in einem ersten Betriebsmodus in dem Mobilfunknetz 1 und/oder in einem zweiten Betriebsmodus in dem Bündelfunknetz 5 betreibbar, vorliegend bei Bedarf auch gleichzeitig. In Fig. 1 ist eine prinzipiell im Mobilfunknetz 1 mögliche Kommunikationsverbindung mit dem mit dem Bezugszeichen 18 gekennzeichneten Pfeil dargestellt.

Bei Eingang einer seitens der Einrichtung4 (GMSC) eingehenden, an das mobile Endgerät 2 im Mobilfunknetz 1 gerichteten Kommunikationsverbindung 3, welche aus dem Mobilfunknetz 1 oder einem weiteren hier nicht dargestellten Kommunikationsnetz, beispielsweise einem drahtgebundenen Fernsprechnetz - einem sogenannten Festnetz - kommen kann, werden von der Einrichtung 4 (GMSC) die für einen Verbindungsaufbau im Mobilfunknetz 1 erforderlichen Vermittlungsfunktionen zum Aufbau von Kommunikationsverbindungen im Mobilfunknetz 1 gestartet. Dabei wird ein sogenannter Mobile Terminated Call mit entsprechenden Protokollen durchgeführt. Ein solcher Mobile Terminated Call umfasst eine an die Datenbank 7 (HLR) gerichtete Lokalisierungsanfrage (Send Routing Information (SRI)), innerhalb deren die dem mobilen Endgerät 2 im Mobilfunknetz 1 zugeordnete MSISDN (Rufnummer im Mobilfunknetz), welche in der Kommunikationsverbindung 3 enthalten ist, genutzt und an die Datenbank 7 zur weiteren Lokalisierung des Aufenthaltsortes des mobilen Endgerätes 2 im Mobilfunknetz 1 übergeben wird. Dabei wird versucht die aktuelle mobile Vermittlungsstelle (Mobile Switching Center (MSC)) im Mobilfunknetz 1 zu ermitteln, welche mit der jeweiligen Datenbank 8 (VLR) assoziiert ist. In der Regel wird dabei die anhand der MSISDN ermittelbar IMSI des mobilen Endgerätes genutzt. Die Datenbank 8 (VLR) liefert dann der Datenbank 7 (HLR) das Lokalisierungsergebnis, in Fig. 1 mit dem Bezugszeichen 10 gekennzeichnet. Dabei wird seitens der Datenbank 8 (VLR) der über die Lokalisierungsanfrage 9 übergebenen IMSI eine temporäre Mobile Station Roaming Number (MSRN) zugeordnet, die dann als bzw. mit dem Lokalisierungsergebnis 10 der Datenbank 7 (HLR) zurückgegeben wird. Die Datenbank 7 (HLR) gibt diese dann der Einrichtung 4 (GMSC) als Lokalisierungsergebnis 11 zurück.

Vorliegend ist das mobile Endgerät 2 aktiv im Bündelfunknetz 5 angemeldet und in einer sogenannten Gruppenkommunikation 16 mit entsprechend im Bündelfunknetz 5 betreibbaren mobilen Endgeräten 14 und 15 verbunden. Dabei ist das mobile Endgerät 2 vorliegend derart betrieben, dass dieses aus über das Mobilfunknetz 1 mittels Kommunikationsverbindungen 18 nicht mehr erreichbar ist. Das mobile Endgerät 2verschwindet damit quasi als eigenständige Identität aus dem Mobilfunknetz 1, was in Fig. 1 durch die hellgraue Farbe des mobilen Endgerätes 2 und der Kommunikationsverbindung 18 symbolisch dargestellt ist.

Ein Mobile Terminated Call für das mobile Endgerät 2 liefert dementsprechend normalerweise eine nicht gegebene Erreichbarkeit das mobilen Endgerätes 2 im Mobilfunknetz 1 und/oder eine nicht zustande kommende Kommunikationsverbindung als Lokalisierungsergebnis 11 an die Einrichtung 4 (GMSC).

Seitens der Datenbank 7 (HLR und/oder seitens der Datenbank 8 (VLR) ist vorliegend eine Information über den Aufenthalt des mobilen Endgerätes in dem Kommunikationsnetz 5 erfasst, welche bei entsprechendem Lokalisierungsergebnis 10 des Mobile Terminated Calls 6, 9, 10 von der Datenbank 7 (HLR) der Einrichtung 4 (GMSC) als Lokalisierungsergebnis 11 auf die Lokalisierungsanfrage 6 zurückgegeben wird. Die Einrichtung 4 nutzt diese Information dann zum Aufbau und/oder zur Vermittlung der an das mobile Endgerät 2 gerichteten Kommunikationsverbindung 3 für eine entsprechende Kommunikationsverbindung 12 und 13 an das mobile Endgerät 2 im Kommunikationsnetz 5. Das mobile Endgerät 2 erhält somit seitens des Mobilfunknetzes 1 quasi eine zweite Identität, über die dieses dann erreichbar ist. Dabei werden vorteilhafterweise seitens der Datenbank 7 (HLR), der Datenbank 8 (VLR) und/oder seitens des Kommunikationsnetzes 5 weitergehende Informationen berücksichtigt, die insbesondere zur Feststellung bzw. Berücksichtigung von nutzerindividuellen weiteren Kommunikationsbedingen nutzbar sind, beispielsweise, ob eine entsprechende Kommunikationsverbindung 3 zu dem mobilen Endgerät 2 im Kommunikationsnetz 5 überhaupt gewünscht oder erlaubt ist.

Alternativ kann die Datenbank 7 (HLR) bei Eingang einer entsprechenden aufgrund einer Kommunikationsverbindung 3 erfolgenden Lokalisierungsanfrage selbst durch Abfrage bzw. Suchen innerhalb der Datenbank 7 (HLR) feststellen, ob eine als Lokalisierungsergebnis 11 nutzbare Information bezüglich des Aufenthaltsortes des mobilen Endgerätes 2 im Kommunikationsnetz 5 erfasst ist. Eine solche Abfrage kann dabei vorteilhafterweise alternativ, gleichzeitig und/oder nach den weiteren Verfahrensschritten 9 und 10 des Mobile Terminated Call erfolgen, und ist in Fig. 1 durch den mit dem Bezugszeichen 17 versehenen Doppelpfeil symbolisch dargestellt.

Die Datenbank 7 (HLR) und/oder die Datenbank 8 (VLR), die Einrichtung 4 (GMSC) des Mobilfunknetzes 1 als auch das mobile Endgerät 2 sind eine dementsprechende Nutzung verwirklichend und betreibend ausgebildet und werden entsprechend betrieben, vorteilhafterweise durch entsprechende Programmierung mittels einer Software.

In einer besonders bevorzugten alternativen Ausgestaltung der Erfindung ist das Kommunikationsnetz 5 das Mobilfunknetz 1 selbst. Das Mobilfunknetz 1 ermöglicht dabei für den in der Fig. 1 dargestellten Betrieb des Kommunikationsnetzes 5 als Mobilfunknetz 1 eine Gruppenfunktionalität, bei der die mobilen Endgeräte 2, 14 und 15 im Mobilfunknetz mit einer einzigen gemeinsamen Identität betrieben und erfasst sind, vorzugsweise in einem entsprechenden Eintrag seitens der Datenbank 7 (HLR), einem sogenannten Group Call Register (GCR). Die vorliegend aus den mobilen Endgeräten 2, 14 und 15 Gruppe ist dementsprechend über das dann einheitliche Mobilfunknetz, bestehend aus den nur in Fig. 1 zeichnerisch zweigeteilten Netzen 1 und 5, mit einer Identität entsprechend dem GCR erreichbar. Eine individuelle Erreichbarkeit der mobilen Endgeräte erfolgt dann entsprechend über deren jeweilige zweite Identität im Mobilfunknetz, welche in der Datenbank 7 (HLR) erfasst und wie beschrieben im Rahmen eines Mobile Terminal Calls genutzt wird.

Seitens eines Mobilfunknetzes 1 gemäß dem GSM- und/oder GPRS-Standard erfolgt dabei vorteilhafterweise ein Monitoring eines mobilen Endgerätes 2 über den sogenannten BCCH-Signalisierungskanal (Broadcast Common Channel (BCCH)) über welchen entsprechende Systeminformationen über die mobilen Endgeräte die im Mobilfunknetz angemeldet aber nicht aktiv sind anderen aktiven Teilnehmern des Mobilfunknetzes informiert sein müssen. Für ein mit einer ersten Identität aus dem Mobilfunknetz in einer Gruppe unter- bzw. aufgegangenes mobiles Endgerät 2 kann so über den BCCH mit der zweiten Identität erkannt werden, dass dieses mit der ersten Identität für Kommunikationsverbindungen gesucht, das heißt gerufen wird. Erfindungsgemäß kann die zweite Identität dann die Kommunikationsverbindungen für die erste Identität annehmen bzw. übernehmen, vorteilhafterweise gesteuert über das HLR.

Weiter erfolgt seitens eines Mobilfunknetzes 1 gemäß dem GSM- und/oder GPRS-Standard bei Betrieb und entsprechender Nutzung von mobilen Endgräten 2 mit zwei Identitäten in dem Mobilfunknetz 1 ein Handover zwischen den beiden Identitäten für Sprachverbindungen und/oder ein Senden und/oder Empfangen von Kurzmitteilungsnachrichten (Short Message Service (SMS)) vorteilhafterweise über den sogenannten SDCCH-Signalisierungskanal (Standalone Dedicated Control Channel (SDCCH)) und/oder ein entsprechender Datenempfang über GPRS, vorzugsweise zur Alarmierung eines mobilen Endgerätes 2 über die zweite individuell nutzbare Identität.

Das in der Fig. der Zeichnung dargestellte Ausführungsbeispiel dient lediglich der Erläuterung der Erfindung und ist für diese nicht beschränkend.

### Bezugszeichenliste

- 1: Mobilfunknetz
- 2: mobiles Endgerät (Mobilfunknetz (1) und/oder Kommunikationsnetz (5))
- 3: Kommunikationsverbindung (gerichtet an mobiles Endgerät (2))
- 4: Einrichtung/Gateway Mobile Switching Center (GMSC)
- 5: Kommunikationsnetz/Bündelfunknetz
- 6: Lokalisierungsanfrage (Mobilfunknetz (1))
- 7: Datenbank/Home Location Register (HLR)
- 8: Datenbank/Visitor Location Register (VLR)
- 9: Lokalisierungsanfrage (intern mittels MSRN)
- 10: Lokalisierungsergebnis (Mobilfunknetz)
- 11: Lokalisierungsergebnis (Kommunikationsnetz (5))
- 12: Kommunikationsverbindung (Kommunikationsnetz (5))
- 13: Kommunikationsverbindung (Kommunikationsnetz (5))
- 14: mobiles Endgerät (Kommunikationsnetz (5))
- 15: mobiles Endgerät (Kommunikationsnetz (5))
- 16: Gruppenkommunikation (mobile Endgeräte (2, 14, 15))
- 17: Suche in Datenbank
- 18: Kommunikationsverbindung (Mobilfunknetz (1))

## Patentansprüche

1. System zur Lokalisierung des Aufenthaltsortes eines in einem Mobilfunknetz (1) betreibbaren mobilen Endgerätes (2) für an dieses gerichtete Kommunikationsverbindungen (3),
wobei das Mobilfunknetz (1) wenigstens eine Vermittlungsfunktionen zum Aufbau von Kommunikationsverbindungen (18, 13) in dem Mobilfunknetz (1) und/oder in einem weiteren Kommunikationsnetz (5) wahrnehmende Einrichtung (4) aufweist,
welche zumindest dazu mit einer Informationen über die Identität, den Aufenthaltsort und die zur Verfügung stehenden Dienste der mobilen Endgeräte (2) im Mobilfunknetz (1) enthaltenden Datenbank (7, 8) des Mobilfunknetzes (1) verbindbar ist,
wobei für wenigstens ein in einem ersten Betriebsmodus in dem Mobilfunknetz (1) und in einem zweiten Betriebsmodus in dem weiteren Kommunikationsnetz (5) betreibbares mobiles Endgerät (2) in der Datenbank (7, 8) des Mobilfunknetzes (1) wenigstens eine Information über den zweiten Betriebsmodus erfasst ist, welche eine Information über eine Identität des mobilen Endgerätes (2) in dem weiteren Kommunikationsnetz (5) und/oder eine Information über einen Aufenthaltsort des mobilen Endgerätes (2) in dem weiteren Kommunikationsnetz (5) umfasst,
**dadurch gekennzeichnet, dass**
die wenigstens eine Information über den zweiten Betriebsmodus von der Einrichtung (4) zum Aufbau und/oder zur Vermittlung einer an das mobile Endgerät (2) gerichteten Kommunikationsverbindung (3) nutzbar ist,
das weitere Kommunikationsnetz (5) ein digitales Bündelfunknetz gemäß TETRA- und/oder TETRAPOL-Standard ist,
das mobile Endgerät (2) in dem zweiten Betriebsmodus eine Gruppenkommunikation (16) des digitalen Bündelfunknetzes nutzend betrieben wird, wobei das mobile Endgerät (2) aufgrund einer aktiven Anmeldung im Bündelfunknetz über das Mobilfunknetz (1) mittels Kommunikationsverbindungen (18) des Mobilfunknetzes (1) nicht mehr erreichbar ist, wobei bei einem Betrieb des mobilen Endgerätes (2) im zweiten Betriebsmodus zumindest eine an das mobile Endgerät (2) über das Mobilfunknetz (1) gerichtete Kommunikationsverbindung (3, 18) nicht möglich ist und das mobile Endgerät (2) in der Datenbank (7, 8) des Mobilfunknetzes (1) hinsichtlich seines Aufenthaltsortes im Mobilfunknetz (1) nicht aktiv auffindbar ist, und
seitens der Datenbank (7, 8) und/oder seitens des Bündelfunknetzes eine Berücksichtigung von Informationen zur Feststellung von nutzerindividuellen weiteren Kommunikationsbedingungen umfassend Informationen, ob die an das mobile Endgerät (2) gerichtete Kommunikationsverbindung (3) gewünscht oder erlaubt ist, vorgesehen ist.

2. System nach Anspruch 1, **dadurch gekennzeichnet, dass** eine Nutzung der Information über den zweiten Betriebsmodus erfolgt, wenn eine an das mobile Endgerät (2) gerichtete Kommunikationsverbindung (3) über das Mobilfunknetz (1) nicht möglich ist.

3. System nach Anspruch 1 oder Anspruch 2, **dadurch gekennzeichnet, dass** die Datenbank (7, 8) die Information über den zweiten Betriebsmodus der Einrichtung (4) zur Verfügung stellt.

4. System nach einem der Ansprüche 1 bis 3, **dadurch gekennzeichnet, dass** mittels der Information über den zweiten Betriebsmodus eine Kommunikationsverbindung (12) in das digitale Bündelfunknetz über die Einrichtung (4) erfolgt.

5. System nach einem der Ansprüche 1 bis 4, **dadurch gekennzeichnet, dass** die Information über die Identität des mobilen Endgerätes (2) in dem digitalen Bündelfunknetz anhand eines für einen Betrieb des mobilen Endgerätes (2) in einem zweiten Betriebsmodus in dem digitalen Bündelfunknetz seitens des mobilen Endgerätes (2) genutzten Teilnehmeridentifikationsmoduls (SIM) bestimmbar ist.

6. System nach einem der Ansprüche 1 bis 5, **dadurch gekennzeichnet, dass** die Einrichtung (4) eine mobile Vermittlungsstelle (Mobile Switching Center (MSC)) des Mobilfunknetzes (1) nutzend ausgebildet ist.

7. System nach einem der Ansprüche 1 bis 6, **dadurch gekennzeichnet, dass** die Einrichtung (4) ein Gateway Mobile Switching Center (GMSC) des Mobilfunknetzes (1) ist.

8. System nach einem der Ansprüche 1 bis 7, **dadurch gekennzeichnet, dass** die Datenbank (7, 8) des Mobilfunknetzes (1) das Home Location Register (HLR) und/oder ein Visitor Location Register (VLR) ist.

9. Verfahren zur Lokalisierung des Aufenthaltsortes eines in einem Mobilfunknetz (1) betreibbaren mobilen Endgerätes (2) für an dieses gerichtete Kommunikationsverbindungen (3),
wobei das Mobilfunknetz (1) wenigstens eine Vermittlungsfunktionen zum Aufbau von Kommunikationsverbindungen (18, 13) in dem Mobilfunknetz (1) und/oder in einem weiteren Kommunikationsnetz (5) wahrnehmende Einrichtung (4) aufweist,
welche zumindest dazu mit einer Informationen über die Identität, den Aufenthaltsort und die zur Verfügung stehenden Dienste der mobilen Endgeräte (2) im Mobilfunknetz (1) enthaltenden Datenbank (7, 8) des Mobilfunknetzes (1) verbindbar ist,
wobei für wenigstens ein in einem ersten Betriebsmodus in dem Mobilfunknetz (1) und in einem zweiten Betriebsmodus in dem weiteren Kommunikationsnetz (5) betreibbares mobiles Endgerät (2) in der Datenbank (7, 8) des Mobilfunknetzes (1) wenigstens eine Information über den zweiten Betriebsmodus erfasst ist, welche eine Information über eine Identität des mobilen Endgerätes (2) in dem weiteren Kommunikationsnetz (5) und/oder eine Information über einen Aufenthaltsort des mobilen Endgerätes (2) in dem weiteren Kommunikationsnetz (5) umfasst,
**dadurch gekennzeichnet, dass**
die wenigstens eine Information über den zweiten Betriebsmodus von der Einrichtung (4) zum Aufbau und/oder zur Vermittlung einer an das mobile Endgerät (2) gerichteten Kommunikationsverbindung (3) nutzbar ist,
das weitere Kommunikationsnetz (5) ein digitales Bündelfunknetz gemäß TETRA- und/oder TETRAPOL-Standard ist,
das mobile Endgerät (2) in dem zweiten Betriebsmodus eine Gruppenkommunikation (16) des digitalen Bündelfunknetzes nutzend betrieben wird, wobei das mobile Endgerät (2) aufgrund einer aktiven Anmeldung im Bündelfunknetz über das Mobilfunknetz (1) mittels Kommunikationsverbindungen (18) des Mobilfunknetzes (1) nicht mehr erreichbar ist, wobei bei einem Betrieb des mobilen Endgerätes (2) im zweiten Betriebsmodus zumindest eine an das mobile Endgerät (2) über das Mobilfunknetz (1) gerichtete Kommunikationsverbindung (3, 18) nicht möglich ist und das mobile Endgerät (2) in der Datenbank (7, 8) des Mobilfunknetzes (1) hinsichtlich seines Aufenthaltsortes im Mobilfunknetz (1) nicht aktiv auffindbar ist, und
seitens der Datenbank (7, 8) und/oder seitens des weiteren Kommunikationsnetzes (5) Informationen zur Feststellung von nutzerindividuellen weiteren Kommunikationsbedingungen umfassend Informationen, ob die an das mobile Endgerät (2) gerichtete Kommunikationsverbindung (3) gewünscht oder erlaubt ist, berücksichtigt werden.

## Claims

1. A system for localising the local position of a mobile terminal (2) that can be operated in a mobile radio network (1) for communication connections (3) directed to the mobile terminal (2),
wherein the mobile radio network (1) comprises at least one device (4) which realizes switching functions for establishing communication connections (18, 13) in the mobile radio network (1) and/or in a further communication network (5),
which device (4) can be connected at least for this purpose with a database (7, 8) of the mobile radio network (1), which database (7, 8) contains information about the identity, the local position and the available services of the mobile terminals (2) in the mobile radio network (1),
wherein for at least one mobile terminal (2) that is operable in a first operation mode in the mobile radio network (1) and in a second operation mode in the further communication network (5), at least one information item about the second operation mode is gathered in the database (7, 8) of the mobile radio network (1), which information item comprises an information item about an identity of the mobile terminal (2) in the further communication network (5) and/or an information item about a local position of the mobile terminal (2) in the further communication network (5),
**characterized in that**
the at least one information item about the second operation mode can be used by the device (4) for establishing and/or switching a communication connection (3) directed to the mobile terminal (2),
the further communication network (5) is a digital trunked radio network according to the TETRA and/or TETRAPOL standard,
the mobile terminal (2) is operated in the second operation mode while using a group communication (16) of the digital trunked radio network, wherein the mobile terminal (2) is no more reachable by means of communication connections (18) of the mobile radio network (1) due to an active login in the trunked radio network via the mobile radio network (1), wherein in case of operating the mobile terminal (2) in the second operation mode, at least one communication connection directed to the mobile terminal (2) via the mobile radio network (1) is not possible and the mobile terminal (2 cannot be actively found in the database (7, 8) of the mobile radio network (1) with respect to the local position thereof in the mobile radio network (1), and
it is provided by the database (7, 8) and/or by the trunked radio network to consider information for determining other user individual communication conditions comprising information whether the communication connection (3) directed to the mobile terminal (2) is desired or permitted.

2. A system according to claim 1, **characterized in that** the information item about the second operation mode is made use of, if a communication connection (3) directed to the mobile terminal (2) is not possible via the mobile radio network (1).

3. A system according to claim 1 or claim 2, **characterized in that** the database (7, 8) makes the information item about the second operation mode available to the device (4).

4. A system according to one of the claims 1 to 3, **characterized in that** a communication connection (12) is established into the digital trunked radio network via the device (4) by means of the information item about the second operation mode.

5. A system according to one of the claims 1 to 4, **characterized in that** the information item about the identity of the mobile terminal (2) in the digital trunked radio network can be determined by means of a subscriber identification module (SIM) used by the mobile terminal (2) for an operation of the mobile terminal (2) in a second operation mode in the digital trunked radio network.

6. A system according to one of the claims 1 to 5, **characterized in that** the device (4) is configured such that it uses a mobile switching centre (MSC) of the mobile radio network (1).

7. A system according to one of the claims 1 to 6, **characterized in that** the device (4) is a gateway mobile switching centre (GMSC) of the mobile radio network (1).

8. A system according to one of the claims 1 to 7, **characterized in that** the database (7, 8) of the mobile radio network (1) is the Home Location Register (HLR) and/or a Visitor Location Register (VLR).

9. A method for localising the local position of a mobile terminal (2) that can be operated in a mobile radio network (1) for communication connections (3) directed to the mobile terminal (2),
wherein the mobile radio network (1) comprises at least one device (4) which realizes switching functions for establishing communication connections (18, 13) in the mobile radio network (1) and/or in a further communication network (5),
which device (4) can be connected at least for this purpose with a database (7, 8) of the mobile radio network (1), which database (7, 8) contains information about the identity, the local position and the available services of the mobile terminals (2) in the mobile radio network (1),
wherein for at least one mobile terminal (2) that is operable in a first operation mode in the mobile radio network (1) and in a second operation mode in the further communication network (5), at least one information item about the second operation mode is gathered in the database (7, 8) of the mobile radio network (1), which information item comprises an information item about an identity of the mobile terminal (2) in the other communication network (5) and/or an information item about a local position of the mobile terminal (2) in the further communication network (5),
**characterized in that**
the at least one information item about the second operation mode can be used by the device (4) for establishing and/or switching a communication connection (3) directed to the mobile terminal (2),
the further communication network (5) is a digital trunked radio network according to the TETRA and/or TETRAPOL standard,
the mobile terminal (2) is operated in the second operation mode while using a group communication (16) of the digital trunked radio network, wherein the mobile terminal (2) is no more reachable by means of communication connections (18) of the mobile radio network (1) due to an active login in the trunked radio network via the mobile radio network (1), wherein in case of operating the mobile terminal (2) in the second operation mode, at least one communication connection directed to the mobile terminal (2) via the mobile radio network (1) is not possible and the mobile terminal (2 cannot be actively found in the database (7, 8) of the mobile radio network (1) with respect to the local position thereof in the mobile radio network (1), and
it is provided by the database (7, 8) and/or by the trunked radio network to consider information for determining other user individual communication conditions comprising information whether the communication connection (3) directed to the mobile terminal (2) is desired or permitted.

## Revendications

1. Système de localisation d'une position locale d'un terminal mobile (2) fonctionnant dans un réseau radio mobile (1) pour des liaisons de communication (3) dirigées au terminal mobile (2),
dans lequel le réseau radio mobile (1) comprend au moins un dispositif (4), qui remplit des fonctions de commutation pour établir des liaisons de communication (18, 13) dans le réseau radio mobile (1) et/ou dans un autre réseau de communication (5),
lequel dispositif peut être relié au moins à cette fin à une base de données (7, 8) du réseau radio mobile (1), laquelle base de données (7, 8) contient des informations sur l'identité, la position locale et les services disponibles des terminaux mobiles (2) dans le réseau radio mobile (1),
dans lequel pour au moins un terminal mobile (2) fonctionnant dans un premier mode opérationnel dans le réseau radio mobile (1) et fonctionnant dans un deuxième mode opérationnel dans l'autre réseau de communication (5), au moins une information sur le deuxième mode opérationnel est saisie dans la base de données (7, 8) du réseau radio mobile (1), laquelle information comprend une information sur l'identité du terminal mobile (2) dans l'autre réseau de communication (5) et/ou une information sur une position locale du terminal mobile (2) dans l'autre réseau de communication (5),
**caractérisé en ce que**
l'au moins une information sur le deuxième mode opérationnel peut être utilisée par le dispositif (4) pour établir et/ou commuter une liaison de communication (3) dirigée au terminal mobile (2),
l'autre réseau de communication (5) est un réseau de radiocommunication numérique à ressources partagées selon le standard TETRA et/ou TETRAPOL,
le terminal mobile (2) fonctionne dans le deuxième mode opérationnel en utilisant une communication de groupe (16) du réseau de radiocommunication numérique à ressources partagées, le terminal mobile (2) n'étant plus accessible par moyen de liaisons de communication (18) du réseau radio mobile (1) à cause d'un enregistrement actif dans le réseau de radiocommunication numérique à ressources partagées via le réseau radio mobile (1), dans lequel si le terminal mobile (2) fonctionne dans le deuxième mode opérationnel, au moins une liaison de communication (3, 18) dirigée au terminal mobile (2) via le réseau radio mobile (1) ne sera plus possible, et le terminal mobile (2) ne peut pas être activement trouvé dans la base de données (7, 8) du réseau radio mobile par rapport à sa position locale dans le réseau radio mobile (1), et
il est prévu par la base de données (7, 8) et/ou par le réseau de radiocommunication à ressources partagées de considérer des informations pour déterminer d'autres conditions de communication individuelles à l'utilisateur comprenant des informations si la liaison de communication (3) dirigée au terminal mobile (2) est désiré ou permis.

2. Système selon la revendication 1, **caractérisé en ce que** l'information sera utilisée via le deuxième mode opérationnel, si une liaison de communication (3) dirigée au terminal mobile (2) n'est pas possible via le réseau radio mobile (1).

3. Système selon la revendication 1 ou la revendication 2, **caractérisé en ce que** la base de données (7, 8) met l'information sur le deuxième mode opérationnel à la disposition du dispositif (4).

4. Système selon l'une des revendications 1 à 3, **caractérisé en ce qu'**une liaison de communication (12) est établie via le dispositif (4) dans le réseau de radiocommunication numérique à ressources partagées par moyen de l'information sur le deuxième mode opérationnel.

5. Système selon l'une des revendications 1 à 4, **caractérisé en ce que** l'information sur l'identité du terminal mobile (2) dans le réseau de radiocommunication numérique à ressources partagées peut être déterminée par un module d'identification d'abonné (SIM) utilisé par un terminal mobile (2) pour un fonctionnement du terminal mobile (2) dans un deuxième mode opérationnel dans le réseau de radiocommunication numérique à ressources partagées.

6. Système selon l'une des revendications 1 à 5, **caractérisé en ce que** le dispositif (4) est configuré de sorte qu'il utilise un centre de commutation des services mobiles (Mobile Switching Centre (MSC)) du réseau radio mobile (1).

7. Système selon l'une des revendications 1 à 6, **caractérisé en ce que** le dispositif (4) est un centre de commutation mobile de passerelle (GMSC) du réseau radio mobile (1).

8. Système selon l'une des revendications 1 à 7, **caractérisé en ce que** la base de données (7, 8) du réseau radio mobile (1) est le registre de localisation d'origine (HLR) et/ou un registre de localisation de visiteur (VLR).

9. Procédé de localisation d'une position locale d'un terminal mobile (2) fonctionnant dans un réseau radio mobile (1) pour des liaisons de communication (3) dirigées au terminal mobile (2),
dans lequel le réseau radio mobile (1) comprend au moins un dispositif (4), qui remplit des fonctions de commutation pour établir des liaisons de communication (18, 13) dans le réseau radio mobile (1) et/ou dans un autre réseau de communication (5),
lequel dispositif peut être relié au moins à cette fin à une base de données (7, 8) du réseau radio mobile (1), laquelle base de données (7, 8) contient des informations sur l'identité, la position locale et les services disponibles des terminaux mobiles (2) dans le réseau radio mobile (1),
dans lequel pour au moins un terminal mobile (2) fonctionnant dans un premier mode opérationnel dans le réseau radio mobile (1) et fonctionnant dans un deuxième mode opérationnel dans l'autre réseau de communication (5), au moins une information sur le deuxième mode opérationnel est saisie dans la base de données (7, 8) du réseau radio mobile (1), laquelle information comprend une information sur l'identité du terminal mobile (2) dans l'autre réseau de communication (5) et/ou une information sur une position locale du terminal mobile (2) dans l'autre réseau de communication (5),
**caractérisé en ce que**
l'au moins une information sur le deuxième mode opérationnel peut être utilisée par le dispositif (4) pour établir et/ou commuter une liaison de communication (3) dirigée au terminal mobile (2),
l'autre réseau de communication (5) est un réseau de radiocommunication numérique à ressources partagées selon le standard TETRA et/ou TETRAPOL,
le terminal mobile (2) fonctionne dans le deuxième mode opérationnel en utilisant une communication de groupe (16) du réseau de radiocommunication numérique à ressources partagées, le terminal mobile (2) n'étant plus accessible par moyen de liaisons de communication (18) du réseau radio mobile (1) à cause d'un enregistrement actif dans le réseau de radiocommunication numérique à ressources partagées via le réseau radio mobile (1), dans lequel si le terminal mobile (2) fonctionne dans le deuxième mode opérationnel, au moins une liaison de communication (3, 18) dirigée au terminal mobile (2) via le réseau radio mobile (1) ne sera plus possible, et le terminal mobile (2) ne peut pas être activement trouvé dans la base de données (7, 8) du réseau radio mobile par rapport à sa position locale dans le réseau radio mobile (1), et
il est prévu par la base de données (7, 8) et/ou par le réseau de radiocommunication à ressources partagées de considérer des informations pour déterminer d'autres conditions de communication individuelles à l'utilisateur comprenant des informations si la liaison de communication (3) dirigée au terminal mobile (2) est désiré ou permis.
